# EUROPEAN PATENT SPECIFICATION

(11) **EP 1 470 913 B1**
(45) Date of publication and mention of the grant of the patent: **22.08.2007**
(21) Application number: 04007493.2
(22) Date of filing: 27.03.2004
(51) Int. Cl.: B32B 37/22, B32B 38/06

(54) **Laminating machine**
Kaschiermaschine
Dispositif de lamination

(30) Priority: 25.04.2003 JP 2003121166
(43) Date of publication of application: 27.10.2004
(73) Proprietor: Fujipla Inc., Tokyo 104-0061 (JP)
(72) Inventor: Kubota, Takashi, 195-0062 Tokyo (JP)
(74) Representative: Schwarz, Thomas

(56) References cited:
- FR-A- 2 646 124
- US-A- 5 837 091
- PATENT ABSTRACTS OF JAPAN vol. 2000, no. 24, 11 May 2001 (2001-05-11) & JP 2001 199027 A (DAIKEN TRADE & IND CO LTD), 24 July 2001 (2001-07-24)

## Description

### BACKGROUND ART

This invention relates to an improvement applicable to a laminating machine which is employable for production of a lamination of paper and one or plural thermoplastic resin films, by heating and pressing a layered leaf consisting of a sheet of paper and one or two thermoplastic resin films piled respectively on one or both surfaces of the foregoing sheet of paper. More specifically this invention relates to an improvement applicable to one or both heating and pressing rolls of the foregoing laminating machine, for the purpose to avoid undesired adhesion of a molten thermoplastic resin around the heating and pressing roll or rolls and to prevent the foregoing leaf from winding around the heating and pressing roll, for the ultimate purpose to produce a beautiful lamination free from any defects caused by the foregoing adverse phenomena.

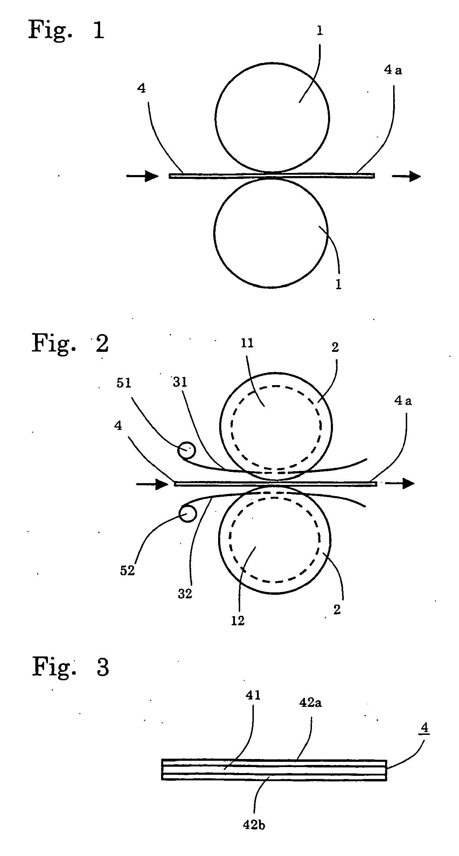

The basic configuration of the foregoing laminating machine available in the prior art is quite simple, as is shown in Fig. 1. Namely, it is primarily a pair of heating and pressing rolls (1) driven by some suitable drive (not shown). A plate (4) shown in Fig. 1 is a layered leaf (4) consisting of a sheet of paper on one or both surfaces of which one or two thermoplastic resin films are respectively piled as shown in Fig. 3, and the leaf (4) which actually is a law material of the lamination, is converted to a lamination (4) by employing the foregoing laminating machine.

The lamination process is an insertion process of the foregoing leaf (4) into a gap between the pair of heating and pressing rolls (1) as shown in Fig. 1. During the lamination process, regulation of temperature is fairly important and delicate, because if the temperature is too low, adhesion becomes insufficient and if the temperature is too high, the thermoplastic resin melts and adheres to the surface of the heating and pressing roll or rolls (1), resultantly causing the leaf (4) to wind around the heating and pressing roll (1), and finally disturbing continuation of the lamination process.

An example for a laminating machine according to the preamble of claim 1 discloses US 5 837 091 in form of an apparatus with to heating and pressure rollers. These rollers form a flat plastic foil out of two polymethacrylate plastics with a flat or oblong object embedded between them, e.g. pictures, color films, filaments, wires, steel spirals or thin strips of other plastics.

In the prior art, various efforts were used to remove the foregoing drawbacks.

An example of the efforts is introduction of reverse rotation of the pair of heating and pressing rolls (1) to be conducted as soon as such disturbance has occurred. Unfortunately, however, another drawback remains, wherein a cost-wise burden is additionally required for preparation of an automatic sensor for finding the disturbance and for preparation of a reversible drive and of the control equipment for the reversible drive. In addition, it is not necessarily easy to realize the expected results, unless the reverse rotation is commenced at the best time, which can hardly be identified.

The other example of the efforts is introduction of scrapers for scraping the thermoplastic resin and the leaf (4) from the surface of the upper or lower heating and pressing roll (1). This leaves, however, another drawback, wherein selection of the material and the shape of the scraper are not necessarily easy. In addition, it is not necessarily easy to realize the expected results, unless the angle and the pressure with which the scraper is applied to the surface of the heating and pressing roll (1) are optimum.

The third example of the efforts was disclosed in JP 04-054831 U(1992) directed to an invention brought out by Mr. Hideyuki Takeda, Vice-President of the applicant. Unfortunately, however, this still leaves necessity for further improvement.

A forth example for overcoming the above mentioned drawbacks of known laminating machines discloses FR 46 646 124 in form of a device for continuously shaping a web made of thermoplastic material. This device has inter alia a roller assembly in which the web is led by two rollers to and from a heating and pressure roller in a surrounding manner, which is an appropriate and reliable measure for preventing the adhesion or winding of the web around the heating and pressure roller. This solution tends to be costly, since two additional rollers are needed.

### DISCLOSURE OF THE INVENTION

Accordingly, the object of this invention is to provide a laminating machine provided with at least one pair of heating and pressing rolls and which is employable for production of a lamination of paper and one or two thermoplastic resin films, by heating and pressing a layered leaf consisting of a sheet of paper and one or two thermoplastic resin films piled respectively on one or both surfaces of the foregoing sheet of paper, wherein the foregoing drawbacks are removed, thereby undesired adhesion of the molten thermoplastic resin around the heating and pressing roll or rolls is avoided and the foregoing leaf is prevented from winding around the heating and pressing roll, resultantly allowing production of a beautiful lamination free from any defects caused by the undesired adhesion of the molten thermoplastic resin around the heating and pressing roll or rolls and any defects caused by winding of the foregoing leaf around the heating and pressing roll.

The first aspect of this invention is defined as a laminating machine provided with at least one pair of heating and pressing rolls (11, 12) for heating and pressing a layered leaf (4) consisting of a sheet of paper (41) and one or two thermoplastic resin films (42a and 42b) piled respectively on one or both surfaces of the foregoing sheet of paper (41), wherein at least one of the heating and pressing rolls (11 or 12) is provided with at least one annular slit (2) produced surrounding the circumferential surface of the roll (11 or 12).

The second aspect of this invention is defined as a laminating machine defined in the first aspect of this invention, further provided with a wire (31 or 32) extending in the annular slit (2) along a layered leaf (4) to be converted to a lamination (4a), the wire (31 or 32) being supported by a wire supporter (51 or 52) arranged at the upstream of the pair of the heating and pressing rolls (11, 12).

The third aspect of this invention is defined as a laminating machine defined in the first or second aspect of this invention, wherein the quantity of the pair of heating and pressing rolls (11, 12) is plural.

The fourth aspect of this invention is defined as a laminating machine defined in the third aspect of this invention, wherein both the upper and lower rolls of each pair of heating and pressing rolls (11, 12) are provided with at least one annular slit (2) produced surrounding the circumferential surface of the roll (11 or 12).

The fifth aspect of this invention is defined as a laminating machine defined in the fourth aspect of this invention, further provided with a wire (31 or 32) extending in each of the annular slits (2) along the layered leaf (4) to be converted to a lamination (4a), the wire (31 or 32) being supported by a wire supporter (51 or 52) arranged at the upstream of the pair of the heating and pressing rolls (11, 12), wherein the upper wire (31) has an upward convex (31a) and the lower wire (32) has a downward convex (32a) between each pair of heating and pressing rolls (11, 12).

The sixth aspect of this invention is defined as a laminating machine defined in the fifth aspect of this invention, wherein the annular slit or slits (2) produced surrounding the circumferential surface of the roll (11 or 12) faces or face a flat surface of the other heating and pressing roll or rolls (11, 12).

### BRIEF DESCRIPTION OF THE DRAWINGS

Fig. 1 is a side view of a laminating machine available in the prior art,
Fig. 2 is a side view of a laminating machine in accordance with the first embodiment (second aspect) of this invention,
Fig. 3 is a cross section of a layered leaf consisting of a sheet of paper and one or plural thermoplastic resin films piled respectively on one or both surfaces of the foregoing sheet of paper, which is the raw material of a lamination produced by employing a laminating machine of this invention,
Fig. 4 is a front view of a pair of heating and pressing rolls of a laminating machine in accordance with the sixth aspect of this invention, and
Fig. 5 is a side view of a laminating machine in accordance with the second embodiment (fifth aspect) of this invention.

### BEST MODES IMPLEMENTING THIS INVENTION

### FIRST EMBODIMENT

Embodiment for a laminating machine provided with a single pair of heating and pressing rolls (11, 12) each of which is provided with at least one slit (2).

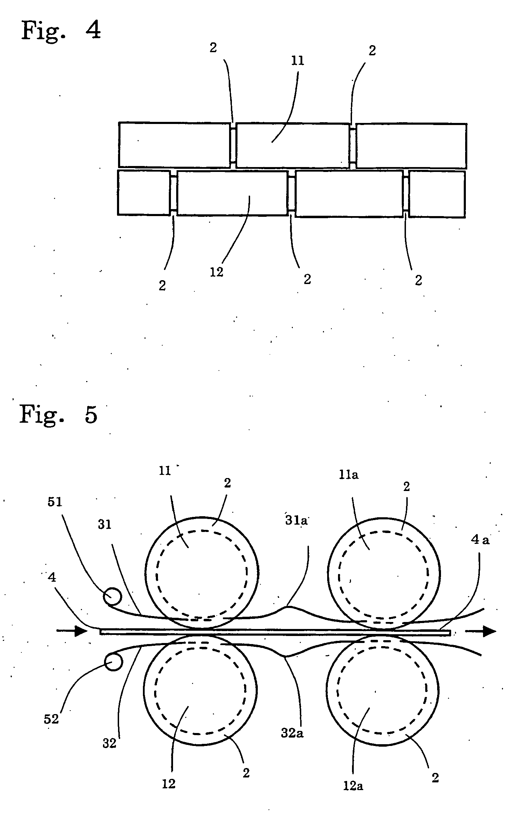

Referring to Fig. 2, a laminating machine in accordance with the first embodiment of this invention is provided with a single pair of heating and pressing rolls (11, 12) for heating and pressing a layered leaf (4) consisting of a sheet of paper and two thermoplastic resin films piled on each surface of the sheet of paper as shown in Fig. 3, the layered leaf (4) being fed in the direction of an arrow. The both heating and pressing rolls (11, 12) are provided with at least one annular slit (2) produced surrounding the circumferential surface of the roll (11, 12) as shown in Fig. 4. An exemplary dimension of the annular slit (2) is 5 mm in depth and 1 mm in width. Further, an upper wire (31) and a lower wire (32) extend in each of the annular slits (2) along the layered leaf (4) to be converted to a lamination (4a), the wires (31, 32) being respectively supported by an upper wire supporter (51) and a lower wire supporter (52) respectively arranged at the upstream of the pair of heating and pressing rolls (11, 12). The wires (51 and 52) can be made of a piano wire having a diameter of e.g. 0.5 mm or of a bar made of a shape memorable alloy. The temperature of the heating and pressing rolls (11, 12) can be selected in the approximate range of 50 through 150 degrees C, preferably 100 through 120 degrees C. After the paper and the thermoplastic resin films are stuck to each other to convert the layered leaf (4) to a product lamination (4a), the product lamination (4a) is discharged in the direction of an arrow, without winding around either the upper heating and pressing roll (11) or the lower heating and pressing roll (12).

Referring to Fig. 3, the layered leaf (4) is a piled plate made of a sheet of paper (41) having a thermoplastic resin films (42a, 42b) piled on each surface of the sheet of paper (41).

Referring to Fig. 4, the upper heating and pressing rolls (11) and the lower heating and pressing rolls (12) are respectively provided with one or more annular slits (2) produced surrounding the circumferential surface of the rolls (11, 12). Each of the annular slits (2) is arranged not to face with each other. In other words, an annular slit (2) is arranged to face the flat surface of the heating and pressing roll (11 or 12).

### SECOND EMBODIMENT

Embodiment for a laminating machine provided with plural pairs of heating and pressing rolls (11, 12, 11a, 12a) each of which is provided with at least one annular slit (2).

Referring to Fig. 5, the fundamental concept of a laminating machine in accordance with the second embodiment of this invention is entirely identical to that of the laminating machine in accordance with the first embodiment, excepting the quantity of the pairs of heating and pressing rolls (11, 12) is plural and the upper wire (31) has an upward convex (31a) between each upper heating and pressing roll (11,11 a) and the lower wire (32) has an downward convex (32a) between each lower heating and pressing roll (12, 12a).

Namely, the laminating machine is provided with plural pairs of heating and pressing rolls (11, 12, 11a, 12b) for heating and pressing a layered leaf (4) described above, the layered leaf (4) being fed in the direction of an arrow. Each of the heating and pressing rolls (11, 12, 11a, 12b) is provided with at least one annular slit (2) produced surrounding the circumferential surface of the roll (11, 12, 11a, 12b). Further, an upper wire (31) and a lower wire (32) extend in each of the annular slits (2) along the layered leaf (4) described earlier, the wires (31, 32) being respectively supported by an upper wire supporter (51) and a lower wire supporter (52), respectively arranged at the upstream of the pair of heating and pressing rolls (11, 12, 11a, 12b). In addition, the upper wire (31) has an upward convex (31a) between each upper heating and pressing roll (11, 11a) and the lower wire (32) has a downward convex (32a) between each lower heating and pressing roll (12, 12a) for the purpose to prevent the wires (31) and (32) from contacting the leaf (4). As was described earlier, each of the annular slits (2) is arranged not to face with each other. In other words, an annular slit (2) is arranged to face the flat surface of heating and pressing roll (11, 12, 11 a, 12b).

As a result, after the paper and the thermoplastic resin films are stuck to each other to convert the layered leaf (4) to a product lamination (4a), the product lamination (4a) is discharged in the direction of an arrow, without winding around either upper heating and pressing rolls (11, 11a) or the lower heating and pressing rolls (12, 12a).

The above description has clarified that this invention has successfully provided a laminating machine provided with at least one pair of heating and pressing rolls and which is employable for production of a lamination of paper and one or plural thermoplastic resin films, by heating and pressing a layered leaf consisting of a sheet of paper and one or plural thermoplastic resin films piled respectively on one or both surfaces of the foregoing sheet of paper, the laminating machine being free from undesired adhesion of a molten thermoplastic resin around the heating and pressing roll or rolls and from undesired winding of the foregoing leaf around the heating and pressing roll, resultantly being suitable to produce a beautiful lamination free from any defects caused by the foregoing adverse phenomena.

## Claims

1. A laminating machine comprising:
at least one pair of heating and pressing rolls (11, 12) for heating and pressing a layered leaf (4) comprising a sheet of paper (41) and one or two thermoplastic resin films (42a and 42b) piled respectively on one or both surfaces of said sheet of paper (41), **characterized in that** said at least one of the heating and pressing rolls (11, 12) has at least one annular slit (2) produced surrounding the circumferential surface of said roll (11 or 12).

2. A laminating machine in accordance with claim 1, further comprising:
a wire (31 or 32) extending in said annular slit (2) along said layered leaf (4).

3. A laminating machine in accordance with claim 1 or 2, wherein the quantity of said pair of the heating and pressing rolls (11, 12) is plural.

4. A laminating machine in accordance with claim 1, 2 or 3, wherein both the upper and lower rolls of each pair of said heating and pressing rolls (11, 12, 11a, 12a) have at least one annular slit (2) produced surrounding the circumferential surface of said roll (11 or 12).

5. A laminating machine in accordance with claim 4, wherein said upper wire (31) has an upward convex (31a) and said lower wire (32) has a downward convex (32a).

6. A laminating machine in accordance with claim 5, wherein said annular slit or slits (2) produced surrounding the circumferential surface of said roll (11, 12, 11a, 12a) faces or face a flat surface of the other heating and pressing roll or rolls (11, 12, 11a, 12a).

## Patentansprüche

1. Laminiermaschine mit:
mindestens einem Paar von Heiz- und Presswalzen (11, 12) zum Erhitzen und Pressen eines geschichteten Blatts (4) mit einem Blatt Papier (41) und einem oder zwei Filmen (42a und 42b) aus thermoplastischem Harz, die jeweils auf eine oder beide Oberflächen des Blatts Papier (41) gestapelt sind, **dadurch gekennzeichnet, dass** die mindestens eine der Heiz- und Presswalzen (11, 12) mindestens einen ringförmigen Schlitz (2) aufweist, der so hergestellt ist, dass er die Umfangsfläche der Walze (11 oder 12) umgibt.

2. Laminiermaschine nach Anspruch 1, welche ferner umfasst:
einen Draht (31 oder 32), der sich im ringförmigen Schlitz (2) entlang des geschichteten Blatts (4) erstreckt.

3. Laminiermaschine nach Anspruch 1 oder 2, wobei die Menge des Paars der Heizund Presswalzen (11, 12) mehrfach ist.

4. Laminiermaschine nach Anspruch 1, 2 oder 3, wobei sowohl die obere als auch die untere Walze von jedem Paar der Heiz- und Presswalzen (11, 12, 11a, 12a) mindestens einen ringförmigen Schlitz (2) aufweisen, der so hergestellt ist, dass er die Umfangsfläche der Walze (11 oder 12) umgibt.

5. Laminiermaschine nach Anspruch 4, wobei der obere Draht (31) eine Aufwärtswölbung (31a) aufweist und der untere Draht (32) eine Abwärtswölbung (32a) aufweist.

6. Laminiermaschine nach Anspruch 5, wobei der ringförmige Schlitz oder die ringförmigen Schlitze (2), die so hergestellt sind, dass sie die Umfangsfläche der Walze (11, 12, 11a, 12a) umgeben, einer flachen Oberfläche der anderen Heizund Presswalze oder -walzen (11, 12, 11a, 12a) zugewandt ist oder sind.

## Revendications

1. Dispositif de lamination comprenant :
au moins une paire de rouleaux de chauffage et de pression (11, 12) pour chauffer et presser une feuille multicouche (4) comprenant une feuille de papier (41) et un ou deux films de résine thermoplastique (42a et 42b) superposés respectivement sur une ou les deux surfaces de la dite feuille de papier (41), **caractérisé en ce qu'**au moins un des dits rouleaux de chauffage et de pression (11, 12) comporte au moins une gorge annulaire (2) formée autour de la surface circonférentielle du dit rouleau (11 ou 12).

2. Dispositif de lamination selon la revendication 1, comprenant en outre :
un fil (31 ou 32) s'étendant dans la dite gorge annulaire (2) le long de la dite feuille multicouche (4).

3. Dispositif de lamination selon la revendication 1, il y a plusieurs dites paires de rouleaux de chauffage et de pression (11, 12).

4. Dispositif de lamination selon la revendication 1, 2 ou 3, dans lequel les rouleaux supérieur et inférieur de chaque paire de dits rouleaux de chauffage et de pression (11, 12, 11a, 12a) ont tous deux au moins une gorge annulaire (2) formée autour de la surface circonférentielle du dit rouleau (11 ou 12).

5. Dispositif de lamination selon la revendication 4, dans lequel le dit fil supérieur (31) présente une convexité vers le haut (31a) et le dit fil inférieur (32) présente une convexité vers le bas (32a).

6. Dispositif de lamination selon la revendication 5, dans lequel la ou les dites gorges annulaires (2) formées autour de la surface circonférentielle du dit rouleau (11, 12, 11a, 12a) fait ou font face à une surface plate du ou des autres rouleaux de chauffage et de pression (11, 12, 11a, 12a).
